# EUROPÄISCHE PATENTSCHRIFT

(11) **EP 4 143 469 B1**
(45) Veröffentlichungstag und Bekanntmachung des Hinweises auf die Patenterteilung: **23.07.2025**
(21) Anmeldenummer: 21723202.4
(22) Anmeldetag: 30.04.2021
(51) Int. Cl.: F16K 31/00

(54) **VENTILEINRICHTUNG, INSBESONDERE WISCHWASSERVENTIL**
VALVE DEVICE, IN PARTICULAR A WIPER LIQUID VALVE
DISPOSITIF DE SOUPAPE, EN PARTICULIER SOUPAPE DE LIQUIDE D'ESSUIE-GLACE

(30) Priorität: 30.04.2020 DE 102020205555
(43) Veröffentlichungstag der Anmeldung: 08.03.2023
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2021/061382
(87) Internationale Veröffentlichungsnummer: WO 2021/219842

(56) Entgegenhaltungen:
- EP-A1- 3 455 529
- JP-A- 2006 138 235

## Beschreibung

Die Erfindung betrifft eine Ventileinrichtung, insbesondere ein Wischwasserventil, mit einem Gehäuse, das einen Zulaufanschluss, einen Ablaufanschluss und einen den Zulaufanschluss mit dem Ablaufanschluss verbindenden Medienkanal aufweist, und mit einem verlagerbaren Ventilelement, das durch ein erstes Federelement gegen einen in dem Gehäuse ausgebildeten Ventilsitz gedrängt ist, um den Medienkanal zu verschließen, und das durch ein zweites Federelement von dem Ventilsitz wegbewegbar ist, um den Medienkanal zu öffnen, wobei das erste Federelement aus einem thermisch aktivierbaren Material gefertigt ist und in einem deaktivierten Zustand eine erste Federkraft aufweist, die kleiner ist als die des zweiten Federelements, und in einem aktivierten Zustand eine zweite Federkraft, die derart größer ist als die des zweiten Federelements, dass das Ventilelement zum Öffnen des Medienkanals verlagert wird, wobei das erste Federelement zumindest abschnittsweise in einem hohlzylinderförmigen, nach außen von dem Gehäuse vorstehenden Gehäusevorsprung des Gehäuses gehalten ist, wobei das zweite Federelement als Schraubenfeder ausgebildet, bereichsweise auf einen Axialvorsprung des Ventilkörpers aufgeschoben und axial zwischen dem Ventilkörper und dem Gehäuse vorgespannt gehalten ist.

Ventileinrichtungen der eingangs genannten Art sind aus dem Stand der Technik bereits bekannt. So offenbart beispielsweise die Offenlegungsschrift EP 3 455 529 A1 eine Ventileinrichtung der gattungsgemäßen Art. Weil derartige Ventileinrichtungen ein thermisch aktivierbares Federelement aufweisen, das in Abhängigkeit von einer auf das Ventil einwirkenden Temperatur schaltet, werden sie oft als Thermoventil oder Thermoventileinrichtung bezeichnet. So ist es bekannt, eine derartige Ventileinrichtung in einem Tank eines Kraftfahrzeugs mit flüssigem Medium, wie beispielsweise Scheibenwischwasser, Kühlmittel oder Schmiermittel oder dergleichen, anzuordnen, sodass das Gehäuse der Ventileinrichtung dem Medium und damit der Temperatur des Mediums ausgesetzt ist. Das thermisch aktivierbare Federelement ist dabei vorteilhafterweise in einem Gehäusevorsprung angeordnet, der von dem übrigen Gehäuse der Ventileinrichtung vorsteht, sodass das Federelement zu möglichst großen Teilen außerhalb des Gehäuses und innerhalb des Tanks liegt, sodass die Wärmeenergie des Mediums, in welchem die Ventileinrichtung angeordnet ist, schnell und mit geringen Verlusten auf das Federelement übertragen wird, sodass dieses zeitnah seine Aktivierungstemperatur erreicht und schaltet, sodass es die erhöhte Federkraft aufweist, durch welche das Ventilelement in dem Medienkanal gegen den Ventilsitz und entgegen der Federkraft des zweiten Federelements, das als Rückstellfeder wirkt, verlagert wird, sodass der Medienkanal dicht verschlossen und damit die Verbindung zwischen Zulaufanschluss und Ablaufanschluss sicher unterbrochen ist. Zur einfachen Montage ist in dem oben genannten Stand der Technik vorgesehen, dass das Gehäuse mehrteilig ausgebildet ist, wobei eine Teilung zwischen Zulaufanschluss und Ablaufanschluss vorgesehen ist.

Aus der Offenlegungsschrift JP 2006 138235 A ist eine weitere Ventileinrichtung bekannt.

Der Erfindung liegt die Aufgabe zugrunde, eine verbesserte Ventileinrichtung zu schaffen, welche mit einfachen Mitteln eine hohe Lebensdauer gewährleistet und insbesondere eine Fehlfunktion der Ventileinrichtung verhindert.

Die der Erfindung zugrundeliegende Aufgabe wird durch eine Ventileinrichtung mit den Merkmalen des Anspruchs 1 gelöst. Diese hat den Vorteil, dass ein seitliches Ausbrechen oder Ausbiegen der Schraubenfeder dauerhaft durch die konstruktive Ausgestaltung der Ventileinrichtung verhindert ist. Dabei ist die Ausgestaltung der Ventileinrichtung kostengünstig und mit wenig Aufwand realisierbar. Durch eine vorteilhafte Abstimmung von Axialvorsprung und Medienkanal ist gewährleistet, dass die Schraubenfeder über ihre gesamte Länge hinweg radial geführt ist, sodass sie in radialer Richtung entlang ihrer gesamten Länge ein geringes Spiel zur Verfügung hat, wodurch ein Ausbeulen oder seitliches Ausknicken sowie ein Verklemmen der Schraubenfeder in der Ventileinrichtung sicher verhindert ist. Erfindungsgemäß ist hierzu vorgesehen, dass durch den Axialvorsprung des Ventilkörpers und/oder durch einen Innenwandabschnitt des Medienkanals die Schraubenfeder radial geführt ist. Durch den Axialvorsprung, auf welchen die Schraubenfeder aufgesteckt ist, wird die Schraubenfeder radial innen geführt. Durch den Innenwandabschnitt des Medienkanals wird die Schraubenfeder radial außen geführt. Durch eine geschickte Ausbildung von Axialvorsprung und Innenwandabschnitt ist gewährleistet, dass unabhängig vom Betriebszustand der Ventileinrichtung die Schraubenfeder damit stets über ihre gesamte Länge radial von dem Axialvorsprung oder von dem Innenwandabschnitt oder von beiden geführt ist.

Bevorzugt ist der Axialvorsprung derart lang ausgebildet, dass er im deaktivierten Zustand des ersten Federelements derart weit in den Medienkanal hineinragt, dass er dem Innenwandabschnitt bereichsweise gegenüberliegt. Dadurch ist gewährleistet, dass der Axialvorsprung sowohl im deaktivierten Zustand des ersten Federelements als auch im aktivierten Zustand des ersten Federelements bereichsweise dem Innenwandabschnitt des Medienkanals gegenüberliegt, sodass in jedem Betriebszustand der Ventileinrichtung gewährleistet ist, dass die Schraubenfeder entweder außen oder innen radial geführt ist. In dem Bereich, in welchem der Axialvorsprung dem Innenwandabschnitt gegenüberliegt, sodass ein Radialspalt zwischen diesen verbleibt, ist die Schraubenfeder dann durch Axialvorsprung und Innenwandabschnitt sowohl innen als auch außen geführt. Durch diese konstruktiv einfache Maßnahme ist ein sicherer Betrieb der Ventileinrichtung dauerhaft gewährleistet.

Besonders bevorzugt ist ein verbleibender Radialspalt zwischen Innenwandabschnitt und Axialvorsprung größer als ein Federdrahtdurchmesser der Schraubenfeder. Damit weist die Schraubenfeder in dem durch den Radialspalt gebildeten ringförmigen Kanal radiales Spiel auf, sodass ein Verklemmen der Schraubenfeder in dem Radialspalt sicher verhindert ist.

Weiterhin ist bevorzugt vorgesehen, dass der Gehäusevorsprung an seiner freien, von dem Gehäuse abgewandten Seite einen Wärmeleitdorn aufweist, der in den Gehäusevorsprung hinein in Richtung des Ventilelements vorsteht und dadurch eine ringförmige Aufnahmetasche für einen Längsabschnitt des Federelements in dem Gehäusevorsprung bildet. Dies hat den Vorteil, dass ein Wärmeeintrag in das erste Federelement durch den Gehäusevorsprung hindurch verbessert wird. Insbesondere wird das Federelement nunmehr nicht nur von einer Seite, nämlich von außerhalb des Gehäusevorsprungs mit der Wärmeenergie des umgebenden Mediums beaufschlagt, sondern auch innerhalb des Gehäusevorsprungs. Dadurch ergibt sich, dass eine frühzeitige Schaltung beziehungsweise Aktivierung des thermisch sensiblen ersten Federelements (Thermofederelement) erfolgt, sodass ein Schalten der Ventileinrichtung zeitnah nach Erreichen der Aktivierungstemperatur durch das umgebende Medium gewährleistet ist. Dadurch, dass der Wärmeleitdorn in den Gehäusevorsprung hinein vorsteht, wird der in der Aufnahmetasche befindliche Abschnitt des Federelements sowohl von außen, also durch eine Außenwand des Gehäusevorsprungs, als auch durch den Wärmeleitdorn von innen mit der Temperatur des Mediums beaufschlagt. Ist der Wärmeleitdorn massiv ausgebildet, so erfolgt die Wärmeleitung durch das Material des Wärmeleitdorns in den Innenraum des Gehäuses. Durch eine vorteilhafte Materialwahl ist hierbei ein guter Wärmeübergang beziehungsweise eine hohe Wärmeleitfähigkeit gewährleistet, die das frühzeitige Schalten der Ventileinrichtung ermöglicht. Gemäß einer bevorzugten Weiterbildung der Erfindung ist das erste Federelement als Schraubenfeder ausgebildet, die an dem Gehäusevorsprung auf dem Wärmeleitdorn aufgesteckt ist. Durch die Ausbildung als Schraubenfeder weist das Federelement im Querschnitt einen ringförmigen, insbesondere kreisringförmigen Querschnitt auf, dessen Innendurchmesser größer ist als der Außendurchmesser des Wärmeleitdorns, sodass die Schraubenfeder auf dem Wärmeleitdorn aufschiebbar und in die Aufnahmetasche einschiebbar ist. Dadurch ergibt sich neben der zuvor beschriebenen vorteilhaften Wärmeübertragung auf das erste Federelement außerdem der Vorteil einer sicheren axialen Führung und Ausrichtung der Schraubenfeder in dem Gehäuse der Ventileinrichtung. Außerdem wird durch die vorteilhafte Ausbildung des ersten Federelements mithilfe des Wärmeleitdorns die Montage der Ventileinrichtung erleichtert. Weiterhin ist bevorzugt vorgesehen, dass der Wärmeleitdorn als becherförmiger Hohldorn zu der Stirnseite des Gehäusevorsprungs hin offen ausgebildet ist. Damit dringt das umgebende Medium auch in den Wärmeleitdorn selbst ein, sodass das umgebende Medium das erste Federelement nicht nur von außen umgibt, sondern auch innerhalb der Schraubenfeder, nämlich innerhalb des hohlen Bereichs des Wärmeleitdorns vorhanden ist. Dadurch erfolgt ein noch direkterer Wärmeübergang von dem Medium in das Federelement beziehungsweise in die Schraubenfeder von zwei Seiten, nämlich von außen und von innen, sodass ein noch früheres Schalten der Ventileinrichtung gewährleistet ist. Vorzugsweise ist der Wärmeleitdorn aus einem Material mit einem hohen Wärmeleitfähigkeitswert gefertigt. Dazu ist der Wärmeleitdorn beispielsweise aus Aluminium, Silber, Kupfer oder Gold gefertigt. Durch die vorteilhafte Materialwahl wird die Schaltzeit der Ventileinrichtung, nachdem das umgebende Medium die Aktivierungstemperatur erreicht hat, weiter optimiert beziehungsweise verkürzt. Weiterhin ist bevorzugt der Gehäusevorsprung von einem Gehäuseflansch, der von dem übrigen Gehäuse vorsteht, und einem stirnseitig an dem Gehäuseflansch angeordneten Deckel gebildet, wobei der Wärmeleitdorn an dem Deckel angeordnet ist. Durch die zweiteilige Ausbildung des Gehäusevorsprungs wird eine einfache Montierbarkeit der Ventileinrichtung geboten. So können das zweite Federelement, das Ventilelement und das erste Federelement nacheinander durch den Gehäuseflansch in den Medienkanal eingeführt und anschließend der Medienkanal beziehungsweise das Gehäuse durch den Deckel verschlossen werden. Durch die vorteilhafte Ausbildung des Wärmeleitdorns und die dadurch verfügbare Aufnahmetasche für das erste Federelement, insbesondere in Form der Schraubenfeder, ist bei der Montage eine sichere und einfache Führung des Deckels zu dem Gehäuseflansch hin gewährleistet, bei welcher insbesondere die Schraubenfeder an einem seitlichen Ausknicken oder Verkanten bei einer Montage gehindert ist. Besonders bevorzugt ist der Wärmeleitdorn einstückig mit dem Deckel ausgebildet, sodass eine vorteilhafte Wärmeleitung durch den Deckel in dem Wärmeleitdorn gewährleistet ist. Besonders bevorzugt ist der Deckel mit dem Gehäuseflansch stoffschlüssig verbunden, sodass zum einen die Dichtheit des Gehäuses zu dem umgebenden Medium gewährleistet ist, und sodass zum anderen auch an der Schnittstelle zwischen Deckel und Gehäuseflansch eine vorteilhafte Wärmeleitung gewährleistet ist, durch welche die Wärmeenergie des umgebenden Mediums auch im Bereich des Gehäuseflanschs auf das darin angeordnete Federelement wirkt, um ein frühzeitiges Schalten der Ventileinrichtung zu ermöglichen.

Weiterhin ist bevorzugt vorgesehen, dass die Schraubenfedern axial fluchtend zu dem Medienkanal ausgerichtet sind und das Ventilelement axial in dem Medienkanal verschiebbar gelagert ist. Damit ergibt sich zum einen eine vorteilhafte Montage und zum anderen wirkt die Schraubenfeder direkt zwischen dem Ventilelement und dem Gehäuse und drückt das Ventilelement axial gegen den Ventilsitz.

Darüber hinaus ist die Ventileinrichtung bevorzugt derart ausgebildet, dass der Zulaufanschluss und/oder der Ablaufanschluss radial in den Medienkanal münden. Dadurch ist eine vorteilhafte Anordnung der Anschlüsse und des Medienkanals sowie des Ventilelements in dem Gehäuse gewährleistet, bei welcher der Zulaufanschluss durch das Ventilelement fluidtechnisch sicher von dem Ablaufanschluss trennbar ist.

Weiterhin ist bevorzugt vorgesehen, dass das Ventilelement zumindest im Wesentlichen unabhängig von seiner Schiebestellung zumindest abschnittsweise im Bereich des Zulaufanschluss, also im Bereich des Medienkanals, in welchem der Zulaufanschluss in dem Medienkanal mündet, in dem Medienkanal liegt. Damit liegt das Ventilelement stets im Bereich des Zulaufanschluss sodass es von dem zu regelnden beziehungsweise schaltenden Medium umspült oder benetzt ist, wodurch zum einen der Druck des zu schaltenden Mediums ebenfalls auf das Ventilelement in Schließrichtung wirkt, und wodurch zum anderen durch das zugeführte Medium verhindert wird, dass insbesondere ein optional vorgesehenes Dichtelement austrocknet.

Besonders bevorzugt weist das Ventilelement eine becherförmige Aufnahmevertiefung auf, in welcher die Schraubenfeder beziehungsweise das erste Federelement bereichsweise angeordnet ist. Durch die Aufnahmevertiefung ist eine sichere Montage der Schraubenfeder einerseits sowie eine sichere Betätigung des Ventilelements andererseits durch das erste Federelement gewährleistet. Die Schraubenfeder oder das erste Federelement ist vorgespannt zwischen dem Ventilelement und dem Deckel des Gehäuseflanschs beziehungsweise dem Gehäusevorsprung gehalten, unabhängig davon, ob es aktiviert oder nicht aktiviert ist. Dadurch ist eine eindeutige Lagerstellung des Ventilelements gewährleistet, weil es stets von dem ersten und von dem zweiten Federelement mit einer Federkraft beaufschlagt wird, unabhängig von dem Aktivierungszustand des ersten Federelements.

Gemäß einer bevorzugten Weiterbildung der Erfindung weist das Ventilelement einen in Richtung des ersten Federelements größer werdenden Querschnitt auf und der Medienkanal einen in Richtung des Gehäusevorsprungs größer werdenden Querschnitt, sodass das Ventilelement und die Schraube durch eine stirnseitige Öffnung des Gehäusevorsprungs, insbesondere des Gehäuseflanschs in den Medienkanal axial einführbar sind. Die Querschnittsvergrößerung in Richtung des Gehäusevorsprungs von Ventilelement und Medienkanal gewährleistet eine einfache Montage der Ventileinrichtung. Optional weisen das Ventilelement und/oder der Medienkanal einen oder mehrere Hinterschnitte auf - in Einführrichtung in den Medienkanal gesehen - jedoch ohne, dass das Ventilelement den Medienkanal in Einschubrichtung hintergreift. Vielmehr dienen dann die Hinterschnitte beziehungsweise Aussparungen oder Verjüngungen zur verbesserten Medienleitung.

Vorzugsweise ist zwischen dem Ventilelement und dem Gehäusevorsprung ein Leckagespalt vorhanden. Der Leckagespalt gewährleistet, dass etwas von dem durch den Zulaufanschluss zugeführtem Medium, das durch den Zulaufanschluss in den Medienkanal strömt, in den Innenraum des Gehäusevorsprungs gelangt, in welchem auch das erste Federelement zumindest abschnittsweise liegt. Dadurch ist gewährleistet, dass der Gehäusevorsprung mit Medium gefüllt ist, welches den Wärmeübergang von dem Gehäusevorsprungs und insbesondere auch von dem Wärmeleitdorn in das erste Federelement verbessert. Dadurch, dass nur ein Leckagespalt vorhanden ist, also ein Spalt, der nur einen geringen Strömungsfluss zulässt, befindet sich in dem Gehäusevorsprungs im Wesentlichen stehendes Medium, dessen Temperatur sich schnell mit der Temperatur des umgebenden Mediums verändern und dadurch das erste Federelement schalten kann. Weiterhin ist bevorzugt der die Schraubenfeder enthaltene Raum des Gehäuses fluidtechnisch durch die Leckageöffnung mit dem Medienkanal, insbesondere mit dem Zulaufanschluss dauerhaft verbunden. Hierdurch ergibt sich der oben bereits genannte Vorteil, dass sich in dem Innenraum des Gehäusevorsprungs ein Medium befindet, welches zur Wärmeleitung in das erste Federelement in vorteilhafter Weise einwirkt.

Vorzugsweise ist an dem Ventilelement ein insbesondere ringförmiges Dichtelement, insbesondere Elastomerelement, vorzugsweise ein O-Ring, angeordnet, der dazu ausgebildet ist, mit dem Dichtsitz bei Aktivierung des ersten Federelements zusammenzuwirken. Das Dichtelement liegt dann zwischen dem Dichtsitz und dem Ventilelement, sodass es durch seine elastische Verformbarkeit eine sichere Dichtung des Medienkanals gewährleistet. Das Dichtelement ist dabei bevorzugt auf einer Stufe des Ventilelements angeordnet, sodass es in axialer Richtung an dem Ventilelement formschlüssig gehalten ist, sodass auch hohe Anpresskräfte des Dichtelements gegen den Dichtsitz gewährleistet werden können.

Vorzugsweise weist das Ventilelement an seinem dem Gehäuseflansch zugewandten Ende zumindest einen Radialvorsprung auf, der dazu ausgebildet ist, mit einer in dem Medienkanal ausgebildeten Stufe als Axialanschlag in Richtung des Dichtsitzes zusammenzuwirken. Damit bildet nicht der Dichtsitz selbst den Axialanschlag für das Ventilelement, der die maximale Eindringtiefe des Ventilelements in dem Medienkanal begrenzt. Stattdessen wirkt der Radialvorsprung mit der Stufe, die axial beabstandet zu dem Dichtsitz angeordnet ist, zusammen. Durch den Axialanschlag beziehungsweise den Radialvorsprung und die Stufe des Medienkanals wird erreicht, dass eine Beaufschlagung und Belastung des Dichtsitzes, insbesondere eines zwischen Dichtsitz und Ventilelement wirkenden elastisch verformbaren Dichtelements, begrenzt ist, sodass eine Überlastung des Dichtelements auf einfache Art und Weise verhindert wird.

Weiterhin ist bevorzugt das Dichtelement axial beabstandet von dem Radialvorsprung an dem Ventilelement angeordnet, sodass Dichtelement und Radialvorsprung unabhängig voneinander wirken und insbesondere die obenstehende Funktion gewährleistet wird, dass eine maximale elastische Verformung des Dichtelements durch den Radialvorsprung begrenzt wird.

Weiterhin ist bevorzugt vorgesehen, dass der Zulaufanschluss zwischen der Stufe und dem Ventilsitz in den Medienkanal mündet. Damit liegt der Zulaufanschluss zwischen dem Ventilsitz und dem Radialvorsprung des Ventilelements, sodass gewährleistet ist, dass im geschlossenen Zustand der Ventileinrichtung, wenn das Ventilelement gegen den Dichtsitz gedrückt ist, von dem zu schaltenden/zu regelnden Medium umströmt ist, sodass das Medium durch den zuvor genannten optionalen Leckagespalt in den Gehäusevorsprung eindringen kann.

Weiterhin ist bevorzugt vorgesehen, dass der Radialvorsprung dazu ausgebildet ist, mit einem stirnseitigen Ende des Gehäusevorsprungs als Axialanschlag zusammenzuwirken. Damit ist die Bewegung des Ventilelements in beide Schieberichtungen bevorzugt durch den Radialvorsprung begrenzt, in die eine Richtung durch das Zusammenwirken des Radialvorsprungs mit der Stufe des Medienkanals, und in die andere Richtung mit dem Gehäusevorsprung beziehungsweise mit dem Deckel. Dadurch ist der Schiebeweg des Ventilelements in dem Medienkanal formschlüssig definiert, sodass eine Fehlstellung des Ventilelements ausgeschlossen und eine hohe Lebensdauer der Ventileinrichtung gewährleistet ist.

Besonders bevorzugt ist der Ventilsitz als eine Fase in dem Medienkanal ausgebildet. Durch die Fase ist ein sicheres Andrücken des Ventilelements, insbesondere des Dichtelements auf dem Ventilelement gewährleistet, wodurch eine sichere Abdichtung des Medienkanals in aktiviertem Zustand des ersten Federelements gewährleistet ist.

Im Folgenden soll die Erfindung anhand der Zeichnung näher erläutert werden. Dazu zeigen
- Figur 1: eine vorteilhafte Ventileinrichtung in einem ersten Schaltzustand,
- Figur 2: die Ventileinrichtung in einem zweiten Schaltzustand, jeweils in einer vereinfachten Längsschnittdarstellung, und
- Figur 3: eine perspektivische Explosionsdarstellung der Ventileinrichtung.

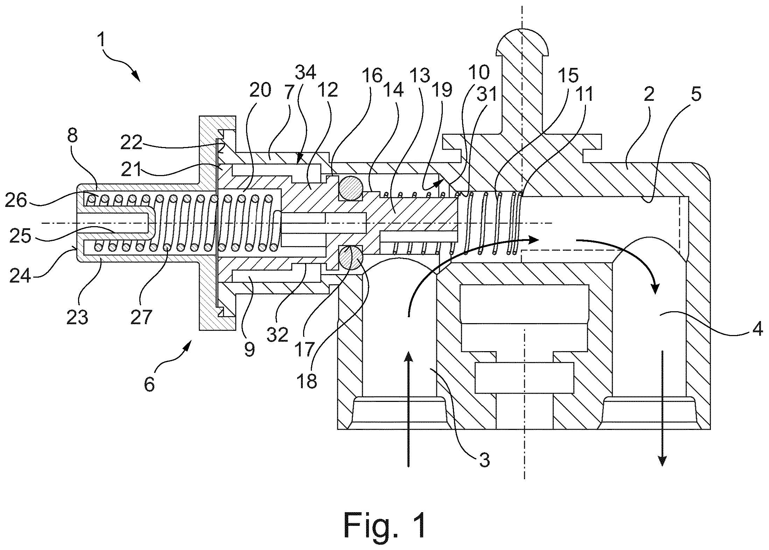

Figur 1 zeigt in einer vereinfachten Schnittdarstellung eine vorteilhafte Ventileinrichtung 1 zum Einbau in einem Tank, beispielsweise für Scheibenwischwasser eines Kraftfahrzeugs. Die Ventileinrichtung 1 weist ein Gehäuse 2 auf, das einen Zulaufanschluss 3 und einen Ablaufanschluss 4 für ein flüssiges und/oder gasförmiges Medium aufweist. Der Zulaufanschluss 3 und der Ablaufanschluss 4 sind dabei als parallel zueinander ausgerichtete Kanäle in dem Gehäuse 2 ausgebildet, die in einen Medienkanal münden. Dabei sind Zulaufanschluss 3 und Ablaufanschluss 4 radial beziehungsweise senkrecht zur Längserstreckung des vorliegend geradlinig verlaufenden Medienkanals 5 ausgerichtet, sodass sie auch radial in den Medienkanal 5 axial beabstandet zueinander münden. Der Medienkanal 5 ist einendig an der Seite der Ablauföffnung 4 geschlossen ausgebildet, und anderendig führt der Medienkanal 5 in einen von dem Gehäuse 2 vorstehenden Gehäusevorsprung 6. Der Gehäusevorsprung 6 weist einen einstückig mit dem Gehäuse 2 ausgebildeten und in Axialerstreckung des Medienkanals 5 vorstehenden Gehäuseflansch 7 auf, der stirnseitig durch einen Deckel 8 verschlossen ist. Der Deckel 8 ist im Längsschnitt becherförmig ausgebildet, sodass der Deckel 8 zusammen mit dem Gehäuseflansch 7 einen Innenraum 9 ausbildet, der mit dem Medienkanal 5 fluchtet.

Der Gehäuseflansch 7 weist einen Querschnitt auf, der größer ist als der des in dem Gehäuse 2 verlaufenden Medienkanals 5, wobei der Medienkanal 5 selbst zwei den Querschnitt in Richtung des Ablaufanschlusses 4 verjüngende Stufen 10 und 11 aufweist. Die Stufe 10 grenzt dabei an den Zulaufanschluss 3 auf der dem Ablaufanschluss 4 zugewandten Seite des Medienkanals 5 an. Die Stufe 11 liegt zwischen der Stufe 10 und dem Ablaufanschluss 4 in dem Medienkanal 5. Vorzugsweise sind die Stufen 10 und 11 vollumfänglich in dem Medienkanal 5 ausgebildet, sodass sie sich jeweils über den Umfang des Medienkanals 5 vollständig ringförmig erstrecken. In Figur 1 ist beispielhaft dargestellt, dass sich der Anschlag der Stufe 11 auch nur bereichsweise über den Umfang des Medienkanals 5 erstrecken kann. Die optionale vollständige Erstreckung ist in Figur 1 durch gestrichelte Linien angedeutet.

Im Bereich des Zulaufanschluss 3 und des Gehäusevorsprungs 6 ist ein kolbenförmiges Ventilelement 12 angeordnet, das axial zu dem Medienkanal 5 verschiebbar ist. Das Ventilelement 12 weist einendig einen Axialvorsprung 13 auf, der dazu ausgebildet ist, in den Medienkanal 5 in Richtung des Ablaufanschlusses 4 einzudringen. Der Axialvorsprung 13 weist beabstandet zu seinem freien Ende eine den Querschnitt vergrößernde Stufe 14 auf, die als Axialanschlag für ein Federelement 15 dient. Das Federelement 15 ist vorliegend als Schraubenfeder ausgebildet, die sich einendig an der Stufe 14 und anderendig an der Stufe 11 des Gehäuses 2 abstützt. Die Schraubenfeder ist dabei axial vorgespannt zwischen dem Ventilelement 12 und dem Gehäuse 2 gehalten, sodass das Federelement 15 das Ventilelement 12 in Richtung des Deckels 8 mit einer Federkraft beaufschlagt.

Auf der von der freien Stirnseite abgewandten Seite der Stufe 14 weist das Ventilelement 12 eine weitere Stufe 16 auf, die einen größeren Querschnitt aufweist, als die Stufe 14. Zwischen den Stufen 14 und 16 ist eine ringförmige Vertiefung 17 als Umfangsnut in dem Ventilelement 12 ausgebildet. In dieser Vertiefung 17 ist ein ringförmiges Dichtelement 18 angeordnet und durch die Stufen 14 und 16 axial formschlüssig an dem Ventilelement 12 gehalten. Das Dichtelement 18 ist dabei als elastisch verformbares Dichtelement, insbesondere als Elastomerelement, vorliegend in Form eines O-Rings ausgebildet, dessen Innendurchmesser kleiner ist als der Außendurchmesser der kleineren Stufe 14.

Das Dichtelement 18 weist dabei einen Durchmesser auf, der im Wesentlichen dem Durchmesser der Stufe 10 entspricht, wobei das Ventilelement 12 derart weit in den Medienkanal 5 mit dem Ende 13 hineinschiebbar ist, dass das Dichtelement 18 gegen die Stufe 10 gedrückt wird, wodurch eine fluidtechnische Verbindung zwischen dem Zulaufanschluss 3 und dem Ablaufanschluss 4 unterbrochen beziehungsweise der Medienkanal 5 zwischen Zulauföffnung 3 und Ablaufanschluss 4 geschlossen wird. Die Stufe 10 bildet somit einen Ventilsitz 19 für das Dichtelement 18 des Ventilelements 12.

Auf dem von dem Axialvorsprung 13 abgewandten Ende weist das Ventilelement 12 eine axiale Aufnahmevertiefung 20 auf, welche der becherförmigen Vertiefung des Deckels 8 gegenüberliegt. Darüber hinaus weist dieses Ende einen Radialvorsprung 21 auf, der sich bevorzugt über den gesamten Umfang des Ventilelements 12, das zumindest im Wesentlichen rotationssymmetrisch ausgebildet ist, erstreckt. Der Radialvorsprung 21 dient als Axialanschlag an der dem Gehäuse 2 zugewandten Stirnseite 22 des Deckels 8. Der Außenradius des Radialvorsprungs 21 ist dabei geringfügig kleiner als der Innendurchmesser des Gehäuseflansches 7, sodass das Ventilelement 12 axial in dem Gehäuseflansch 7 verlagerbar ist, wobei der Radialvorsprung 22 zur radialen Führung des Ventilelements 12 dient. Dadurch, dass der Außendurchmesser des Radialvorsprungs 21 jedoch geringfügig kleiner ist als der Innendurchmesser des Gehäuseflansches 7 ist ein Leckagespalt gewähreistet, durch welchen ein Medium an dem Radialvorsprung 21 vorbei strömen kann.

Der Deckel 8 ist becherförmig ausgebildet und verlängert dadurch den Gehäusevorsprung 7. Dazu weist der Deckel 8 einen zylinderförmigen Vorsprung 23 auf, der sich fluchtend zu der Aufnahme 20 des Ventilelements 12 erstreckt und an der auskragenden Stirnseite 22 des Deckels 8, welche dem Gehäuseflansch gegenüberliegt, endet. Das von dem Gehäuseflansch 7 abgewandte Ende des Deckels 8 beziehungsweise des Vorsprungs 23 ist geschlossen ausgebildet, wodurch der Deckel 8 seine Becherform erhält, wobei in der freien und geschlossenen Stirnseite 24 des Vorsprungs 23 ein Wärmeleitdorn 25 ausgebildet ist, der als Hohldorn sich in Richtung des Gehäuseflansches 7 in den Vorsprung 23 hinein erstreckt. Der Wärmeleitdorn 25 ist koaxial zu dem Vorsprung 23 ausgebildet, sodass zwischen dem Wärmeleitdorn 25 und dem Vorsprung 23 eine ringförmige Aufnahmetasche 26 gebildet ist. Der Wärmeleitdorn 25 ist zur Stirnseite 24 hin offen ausgebildet, sodass ein das Gehäuse 2 umgebendes Medium in den Wärmeleitdorn 25 hinein strömen kann. Gemäß einem alternativen Ausführungsbeispiel ist der Wärmeleitdorn 25 geschlossen, insbesondere massiv ausgebildet. Vorteilhafterweise ist der Wärmeleitdorn 25 einstückig mit dem Deckel 8 ausgebildet, wobei der Wärmeleitdorn 25 aus einem Material mit einem hohen Wärmeleitfähigkeitswert, wie beispielsweise aus Silber, Gold, Kupfer oder Aluminium gefertigt ist.

Zwischen dem Ventilelement 12 und dem Deckel 8 ist ein Federelement 27 axial vorgespannt gehalten. Dazu ist das Federelement 27 als Schraubenfeder ausgebildet, die einendig an dem Boden der Aufnahme 20 des Ventilelements 12 axial anliegt, und anderendig an dem Boden der Aufnahmetasche 26. Dazu ist die Schraubenfeder bereichsweise in die Aufnahmetasche 26 einbeziehungsweise auf den Wärmeleitdorn 25 aufgesteckt, sodass sich dieser in die Schraubenfeder hinein erstreckt.

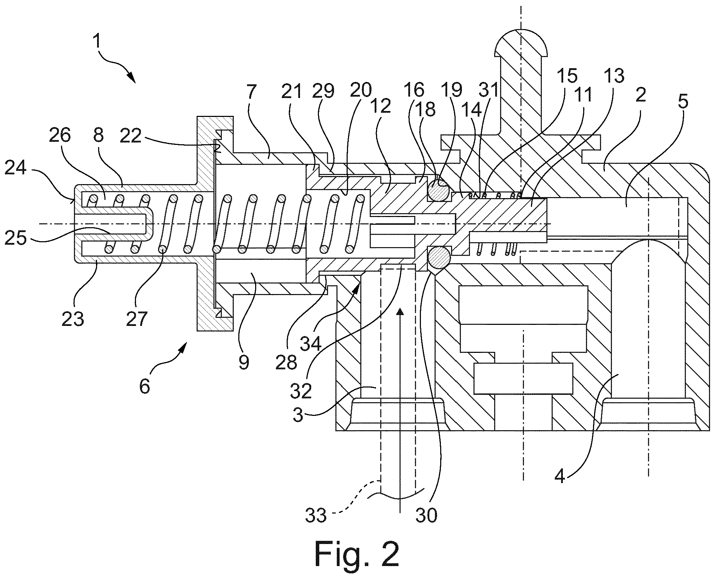

Die Schraubenfeder ist aus einem thermisch aktivierbaren Material, beispielsweise aus einer Formgedächtnislegierung, gefertigt, sodass das Federelement 27 zwei Zustände mit unterschiedlichen Federkräften aufweist. Unterhalb einer Aktivierungstemperatur weist das Federelement 27 eine erste Federkraft auf, die niedriger ist als die Federkraft des Federelements 15. In dem ersten Zustand drängt somit das Federelement 15 das Ventilelement 12 in die in Figur 1 gezeigte Stellung, in welcher das Dichtelement 18 beabstandet zu dem durch die Stufe 10 gebildeten Dichtsitz in dem Medienkanal 5 angeordnet ist, sodass die Verbindung zwischen dem Zulaufanschluss 3 und dem Ablaufanschluss 4 hergestellt ist und ein dem Zulaufanschluss zugeführtes Medium durch die Ventileinrichtung strömt, wie durch die Pfeile in Figur 1 gezeigt. Bei dem Medium handelt es sich beispielsweise um das Kühlmittel von einem Kühlmittelkreislauf des hier nicht näher dargestellten Kraftfahrzeugs. Wird die Aktivierungstemperatur des Federelements 27 überschritten, so wird das Federelement 27 aktiviert und weist dadurch eine Federkraft auf, die größer ist als die des Federelements 15. In Folge dessen wird das Ventilelement 12 durch die Federkraft des nunmehr aktivierten Federelements 27 entgegen der Federkraft des Federelements 15 mit dem Dichtelement 18 gegen den Ventilsitz 19 geschoben, sodass der Medienkanal 5 verschlossen und die Verbindung zwischen dem Zulaufanschluss 3 und dem Ablaufanschluss 4 unterbrochen wird, wie in Figur 2 beispielhaft gezeigt.

Figur 2 zeigt die Ventileinrichtung 1 aus Figur 1 in dem zweiten Schaltzustand, ebenfalls in einer Schnittdarstellung. Aus Figur 1 bereits bekannte Elemente, sind daher mit den gleichen Bezugszeichen versehen. Wie eingangs bereits erwähnt, ist die Ventileinrichtung 1 in einem Tank angeordnet oder anordenbar, der zur Aufbewahrung eines insbesondere flüssigen Betriebsmittels dient, wie beispielsweise ein Öltank, Kraftauftank, Abgasnachbehandlungsmitteltank oder eben Scheibenwischwassertank. Damit ist das Gehäuse 2 der Ventileinrichtung 1 bei bestimmungsgemäßem Gebrauch von einem insbesondere temperierten Medium umgeben. Durch den vorteilhaften Wärmeleitdorn 25 gelangt das Medium auch in einen Bereich innerhalb des Federelements 23, sodass das Federelement 23 sowohl radial von außen als auch radial von innen mit der Wärmeenergie des die Ventileinrichtung 1 umgebenden Mediums beaufschlagt wird.

Zwischen dem Ventilelement 12 und dem Gehäuse 2 ist unabhängig von der Schiebestellung des Ventilelements 12 stets ein Leckagespalt 28 vorhanden, durch welche das von dem Zulaufanschluss 3 kommende Medium in den Innenraum 9 und damit auch in den Innenraum des Deckels 8 gelangen kann. Es ergibt sich dadurch im Normalbetrieb, dass in dem Innenraum des Gehäusevorsprungs 6 Flüssigkeit beziehungsweise flüssiges Medium steht, das ebenfalls als Wärmeübertrager dient. Somit erfolgt nunmehr eine Wärmeübertragung von dem umgebenen Medium durch den Deckel 8, der aus einem Material mit hoher Wärmeleitfähigkeit gefertigt ist, in das Medium im Innenraum 9 des Gehäusevorsprungs 6 und/oder direkt in das Federelement 27. Durch die vorteilhafte Ausbildung insbesondere des Wärmeleitdorns 25 wird erreicht, dass das Federelement 27 durch das umgebene Medium besonders schnell auf die Temperatur des umgebenen Mediums aufgewärmt wird und dadurch beispielsweise besonders schnell die Aktivierungstemperatur überschreitet. Es erfolgt somit ein zeitnaher Schaltvorgang der Wärmeeinrichtung 1 in Abhängigkeit von der Temperatur des umgebenen Mediums.

Der Radialvorsprung 21 des Ventilelements 12 ist axial zwischen dem Deckel 8 und einer in dem Gehäuseflansch 7 ausgebildeten Stufe 29 verlagerbar. Der Radialvorsprung 21 und die Stufe 29 sind dabei derart ausgebildet, dass sie eine maximale Verformung des Dichtelements 18 begrenzen. Dadurch wird einerseits ein dichtender Sitz des Dichtelements 18 an dem Gehäuse 2 gewährleistet, wenn die Aktivierungstemperatur des Federelements 27 überschritten wurde, und gleichzeitig wird gewährleistet, dass das Dichtelement 18 nicht überlastet wird, wodurch eine hohe Lebensdauer der Ventileinrichtung 1 gewährleistet wird. Dadurch, dass sich das Ventilelement 12 im Bereich des Zulaufanschlusses 3 befindet, ist gewährleistet, dass das Dichtelement 18 außerdem dauerhaft von dem Zug durch den Zulaufanschluss 3 zugeführten Medium benetzt erst, sodass ein Austrocknen des Dichtelements 18 verhindert wird. Dazu ist auch im geschlossenen Zustand der Ventileinrichtung 1, wie in Figur 2 gezeigt, eine Öffnung 30 zwischen dem Ventilelement 12 und dem Gehäuse 2 vor, die zu dem Dichtelement 18 führt.

Der Axialvorsprung 13 des Ventilelements 12 ist weiterhin derart lang ausgebildet, dass die Schraubenfeder des Federelements 15 über ihre Gesamtlänge stets radial entweder durch das Ende 13 des Ventilelements 12 und/oder durch die Innenseite des Medienkanals 5 im Gehäuse 2 radial geführt beziehungsweise gehalten und gestützt ist. Im geöffneten Zustand, wie in Figur 1 dargestellt, also solange die Aktivierungstemperatur des Federelements 27 nicht überschritten wurde und das Federelement 27 nicht aktiviert ist, ragt damit der Axialvorsprung 13 bis in den Bereich des Medienkanals 5 stromabwärts der Stufe 10 hinein, in welchem die Schraubenfeder des Federelements 15 an einem Innenwandabschnitt 31 des Medienkanals 5 geführt ist. Durch diese Überschneidung beziehungsweise aneinander Angrenzung der radialen Führungen der Schraubenfeder in axialer Richtung ist gewährleistet, dass die Schraubenfeder 15 stets geführt in dem Medienkanal vorliegt und nicht ausknicken, verkanten oder verklemmen kann.

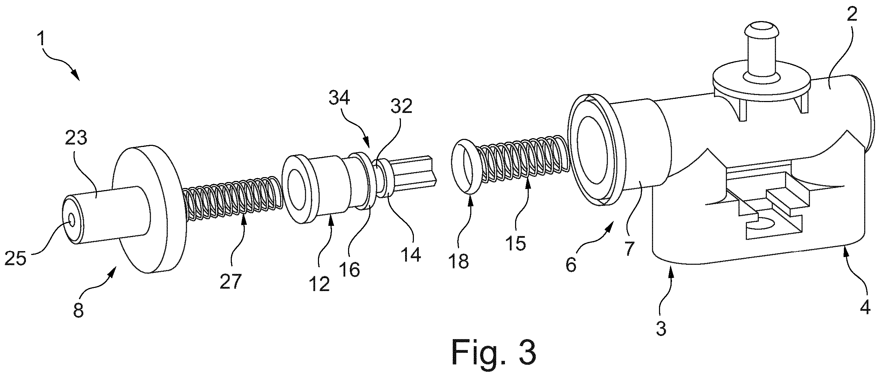

Die Figur 3 zeigt in einer vereinfachten perspektivischen Explosionsdarstellung die Ventileinrichtung 1. Hier ist gut zu erkennen, dass die vorteilhafte Ausbildung der Ventileinrichtung 1 außerdem auch eine einfache Montage erlaubt. Durch den Querschnitt des Medienkanals 5, der sich in Richtung des Deckels 8 vergrößert, und durch den Querschnitt des Ventilelements 12, das sich ebenfalls in Richtung des Deckels 8 im Wesentlichen vergrößert, ist gewährleistet, dass bei der Montage zunächst das Federelement 15, anschließend das Ventilelement 12 mit dem Dichtring 10 und anschließend das Federelement 27 durch den Gehäuseflansch 7 in den Medienkanal 5 eingeführt werden können. Durch die vorteilhafte Aufnahmetasche 26 in den Deckel 8 ist gewährleistet, dass dann, wenn der Deckel 8 auf das Federelement 27 aufgeschoben und dadurch die Federelemente 27 und 15 vorgespannt werden, insbesondere das Federelement 27 nicht seitlich ausbrechen oder sich von dem Deckel 8 bei der Montage lösen kann.

Gemäß dem vorliegenden Ausführungsbeispiel der Figuren 1 bis 3 weist die Ventileinrichtung 1 außerdem eine vorteilhafte Montagehilfe 34 auf, die es beispielsweise dem Monteur erleichtert, bei der Montage der Ventileinrichtung 1 das Ventilelement 12 entgegen der Federkraft des Federelements 15 in dem Innenraum 9 des Gehäuseflanschs 7 eingeschoben zu halten, sodass ohne besonderen Kraftaufwand das Federelement 27 und insbesondere der Deckel 8 an dem freien Ende des Gehäuseflansches 7 befestigt werden können. Durch die Montagehilfe 34 wird insbesondere verhindert, dass bei der Montage des Deckels 8 eine oder eine hohe Federspannung der Federelemente 15 und 27 auf den Deckel 8 wirkt, sodass der Deckel 8 auch beispielsweise an dem Gehäuseflansch 7 verklebt oder verschweißt werden kann, ohne dass hierfür zusätzliche Klemmvorrichtungen an dem Deckel 8 und/oder Gehäuseflansch 7 benötigt werden.

Die Montagehilfe 34 weist dazu eine Umfangsnut 32 in der Mantelaußenseite des Ventilelements 12 auf, die axial zwischen der Stufe 16 und dem Radialvorsprung 21 des Ventilelements 12 liegt. Insbesondere ist dabei die Umfangsnut 32 nahe zu der Stufe 16 in axialer Erstreckung des Ventilelements 12 gesehen ausgebildet. Dabei ist die Position der Umfangsnut 32 insbesondere derart gewählt, dass im eingeschobenen Zustand des Ventilelements 12, in welchem dieses insbesondere an der Dichtfläche 19 anliegt, die Umfangsnut 32 auf Höhe des Zulaufanschluss 3 liegt, wie in Figur 2 gezeigt. Bei der Montage der Ventileinrichtung 1 ist ein Werkzeug 33 durch den Zulaufanschluss 3 in das Gehäuse 2 derart einführbar, dass es in die Umfangsnut 32 eingreift, wie beispielhaft in Figur 2 mit gestrichelten Linien gezeigt. Hierzu kann beispielsweise ein Werkzeug in der Art eines Maulschlüssels oder Schraubenschlüssel genutzt werden, der auf das Ventilelement 12 im Bereich der Umfangsnut 32 aufschiebbar ist, sodass der Maulschlüssel insbesondere axial formschlüssig in der Umfangsnut 32 einliegt und dadurch der Federkraft des Federelements 15 entgegenwirkt und dadurch ein Verlagern des Ventilelements 12 in Richtung des Deckels 8 verhindert. Nach erfolgter Montage des Deckels 8 auf dem Gehäuseflansch 7 kann das Werkzeug 33 wieder entfernt und dadurch die Federkraft des Federelements 15 freigegeben beziehungsweise auf das Ventilelement 12 ausgeübt werden.

## Patentansprüche

1. Ventileinrichtung, insbesondere Wischwasserventil, mit einem Gehäuse (2), das einen Zulaufanschluss (3), einen Ablaufanschluss (4) und einen den Zulaufanschluss (3) mit dem Ablaufanschluss (4) verbindenden Medienkanal (5) aufweist, und mit einem verlagerbaren Ventilelement (12), das durch ein erstes Federelement (27) gegen einen in dem Gehäuse (2) ausgebildeten Ventilsitz (19) gedrängt ist, um den Medienkanal (5) zu verschließen, und das durch ein zweites Federelement (15) von dem Ventilsitz weggedrängt wird, um den Medienkanal (5) zu öffnen, wobei das erste Federelement (27) aus einem thermisch aktivierbaren Material gefertigt ist und in einem deaktivierten Zustand eine erste Federkraft aufweist, die kleiner ist als die des zweiten Federelements (15), und in einem aktivierten Zustand eine zweite Federkraft, die derart größer ist als die des zweiten Federelements (15), dass das Ventilelement (12) zum Schließen des Medienkanals (5) verlagert wird, wobei das erste Federelement (27) zumindest abschnittsweise in einem hohlzylinderförmigen, nach außen von dem Gehäuse (2) vorstehenden Gehäusevorsprung (6) gehalten ist, und wobei das zweite Federelement (15) als Schraubenfeder ausgebildet, bereichsweise auf einen Axialvorsprung (13) des Ventilkörpers (12) aufgeschoben und axial zwischen dem Ventilkörper (12) und dem Gehäuse (2) vorgespannt gehalten ist, **dadurch gekennzeichnet, dass** die Schraubenfeder über ihre gesamte Länge radial geführt ist, durch den Axialvorsprung (13) des Ventilkörpers (12) und/oder durch einen Innenwandabschnitt (31) des Medienkanals (5).

2. Ventileinrichtung nach Anspruch 1, **dadurch gekennzeichnet, dass** der Axialvorsprung (13) derart lang ausgebildet ist, dass er im deaktivierten Zustand des ersten Federelements (27) derart weit in den Medienkanal hineinragt, dass er dem Innenwandabschnitt (31) abschnittsweise gegenüberliegt.

3. Ventileinrichtung nach einem der vorhergehenden Ansprüche, **dadurch gekennzeichnet, dass** ein verbleibender Radialspalt zwischen Innenwandabschnitt (31) und Axialvorsprung (13) größer ist als ein Federdrahtdurchmesser der Schraubenfeder.

4. Ventileinrichtung nach einem der vorhergehenden Ansprüche, **dadurch gekennzeichnet, dass** der Gehäusevorsprung (6) an seiner freien, von dem Gehäuse abgewandten Stirnseite (24) einen Wärmeleitdorn (25) aufweist, der in den Gehäusevorsprung (6) hinein in Richtung des Ventilelements (12) vorsteht und dadurch eine ringförmige Aufnahmetasche (26) für einen Längsabschnitt des ersten Federelements (27) in dem Gehäusevorsprung (6) bildet, wobei der Wärmeleitdorn (25) als becherförmiger Hohldorn zu der Stirnseite (24) des Gehäusevorsprungs (6) hin offen ausgebildet ist.

5. Ventileinrichtung nach Anspruch 4, **dadurch gekennzeichnet, dass** das erste Federelement (27) als Schraubenfeder ausgebildet ist, die in dem Gehäusevorsprung (6) auf den Wärmeleitdorn (25) aufgesteckt ist.

6. Ventileinrichtung nach Anspruch 5, **dadurch gekennzeichnet, dass** die Schraubenfedern axial fluchtend zu dem Medienkanal (5) ausgerichtet sind und das Ventilelement (12) axial in dem Medienkanal (5) verschiebbar gelagert ist.

7. Ventileinrichtung nach einem der vorhergehenden Ansprüche, **dadurch gekennzeichnet, dass** der Zulaufanschluss (3) und/oder der Ablaufanschluss (4) radial in dem Medienkanal (5) münden.

8. Ventileinrichtung nach einem der vorhergehenden Ansprüche, **dadurch gekennzeichnet, dass** das Ventilelement (12) zumindest im Wesentlichen unabhängig von seiner Schiebestellung zumindest abschnittsweise im Bereich des Zulaufanschluss (3) in dem Medienkanal (5) liegt.

9. Ventileinrichtung nach einem der vorhergehenden Ansprüche, **dadurch gekennzeichnet, dass** das Ventilelement (12) einen in Richtung des ersten Federelements (27) größer werdenden Querschnitt aufweist, und dass der Medienkanal (5) einen in Richtung des Gehäusevorsprungs (6) größer werdenden Querschnitt aufweist, sodass das die Federelemente (15, 27) und das Ventilelement (12) durch eine Öffnung des Gehäusevorsprungs (6) in den Medienkanal (5) einführbar sind.

10. Ventileinrichtung nach einem der vorhergehenden Ansprüche, **dadurch gekennzeichnet, dass** zwischen dem Ventilelement (12) und dem Gehäusevorsprung (6) ein Leckagespalt (28) vorhanden ist.

11. Ventileinrichtung nach einem der vorhergehenden Ansprüche, **dadurch gekennzeichnet, dass** an dem Ventilelement (12) ein insbesondere ringförmiges Dichtelement (18), insbesondere Elastomerelement, vorzugsweise O-Ring, angeordnet ist, um mit dem Ventilsitz (19) zusammenzuwirken.

12. Ventileinrichtung nach Anspruch 11,
**dadurch gekennzeichnet, dass** das Ventilelement (12) an seinem von dem Dichtelement (18) abgewandten Ende zumindest einen Radialvorsprung (21) aufweist, der dazu ausgebildet ist, mit einer in dem Medienkanal (5) axial beabstandet zu dem Ventilsitz (19) ausgebildeten Stufe (29) als Axialanschlag in Richtung des Ventilsitzes (19) zusammenzuwirken.

13. Ventileinrichtung nach Anspruch 12,
**dadurch gekennzeichnet, dass** das Dichtelement (18) axial beabstandet von dem Radialvorsprung (21) an dem Ventilelement (12) angeordnet ist.

14. Ventileinrichtung nach einem der Ansprüche 12 oder 13,
**dadurch gekennzeichnet, dass** der Zulaufanschluss (3) zwischen der Stufe (29) und dem Ventilsitz (19) in den Medienkanal (5) mündet.

15. Ventileinrichtung nach einem der Ansprüche 12 bis 14,
**dadurch gekennzeichnet, dass** der Radialvorsprung (21) dazu ausgebildet ist, mit einem stirnseitigen Ende des Gehäusevorsprungs (6) als Axialanschlag zusammenzuwirken.

## Claims

1. Valve device, in particular a wiper liquid valve, with a housing (2) which comprises an inlet connection (3), an outlet connection (4) and a media channel (5) connecting the inlet connection (3) to the outlet connection (4), and with a displaceable valve element (12) which is urged against a valve seat (19) formed in the housing (2) by a first spring element (27) in order to close the media channel (5), and which is urged away from the valve seat by a second spring element (15) in order to open the media channel (5), wherein the first spring element (27) is made of a thermally activatable material and comprises, in a deactivated state, a first spring force which is smaller than that of the second spring element (15), and, in an activated state, a second spring force which is greater than that of the second spring element (15) such that the valve element (12) is displaced to close the media channel (5), wherein the first spring element (27) is held at least partially in a hollow cylindrical housing projection (6) protruding outwards from the housing (2), and wherein the second spring element (15) is designed as a helical spring, is partially pushed onto an axial projection (13) of the valve body (12) and is held in axial preload between the valve body (12) and the housing (2), **characterised in that** the helical spring is guided radially over its entire length by the axial projection (13) of the valve body (12) and/or by an inner wall section (31) of the media channel (5).

2. Valve device according to claim 1, **characterised in that** the axial projection (13) is designed to be so long that, in the deactivated state of the first spring element (27), it projects so far into the media channel that it lies partially opposite the inner wall section (31).

3. Valve device according to one of the preceding claims, **characterised in that** a remaining radial gap between the inner wall section (31) and the axial projection (13) is larger than a spring wire diameter of the helical spring.

4. Valve device according to one of the preceding claims, **characterised in that** the housing projection (6) comprises, on its free front side (24) facing away from the housing, a heat conducting mandrel (25) which protrudes into the housing projection (6) in the direction of the valve element (12) and thereby forms an annular receiving pocket (26) for a longitudinal section of the first spring element (27) in the housing projection (6), wherein the heat conducting mandrel (25) is designed as a cup-shaped hollow mandrel open towards the front side (24) of the housing projection (6).

5. Valve device according to claim 4, **characterised in that** the first spring element (27) is designed as a helical spring which is attached to the heat conducting mandrel (25) in the housing projection (6).

6. Valve device according to claim 5, **characterised in that** the helical springs are aligned axially with the media channel (5) and the valve element (12) is axially displaceably mounted in the media channel (5).

7. Valve device according to one of the preceding claims, **characterised in that** the inlet connection (3) and/or the outlet connection (4) open radially into the media channel (5).

8. Valve device according to one of the preceding claims, **characterised in that** the valve element (12) is located at least substantially independently of its sliding position at least partially in the region of the inlet connection (3) in the media channel (5).

9. Valve device according to one of the preceding claims, **characterised in that** the valve element (12) comprises a cross-section which increases in the direction of the first spring element (27), and **in that** the media channel (5) comprises a cross-section which increases in the direction of the housing projection (6), so that the spring elements (15, 27) and the valve element (12) can be inserted into the media channel (5) through an opening in the housing projection (6).

10. Valve device according to one of the preceding claims, **characterised in that** a leakage gap (28) is provided between the valve element (12) and the housing projection (6).

11. Valve device according to one of the preceding claims, **characterised in that** an in particular annular sealing element (18), in particular an elastomer element, preferably an O-ring, is arranged on the valve element (12) in order to interact with the valve seat (19).

12. Valve device according to claim 11, **characterised in that** the valve element (12) comprises at least one radial projection (21) at its end facing away from the sealing element (18), which is configured to interact with a shoulder (29) formed in the media channel (5) at an axial distance from the valve seat (19) as an axial stop in the direction of the valve seat (19).

13. Valve device according to claim 12, **characterised in that** the sealing element (18) is arranged axially spaced apart from the radial projection (21) on the valve element (12).

14. Valve device according to one of claims 12 or 13, **characterised in that** the inlet connection (3) opens into the media channel (5) between the shoulder (29) and the valve seat (19).

15. Valve device according to one of claims 12 to 14, **characterised in that** the radial projection (21) is configured to interact with a front end of the housing projection (6) as an axial stop.

## Revendications

1. Dispositif de soupape, en particulier soupape de liquide d'essuie-glace, avec un carter (2), lequel comprend un raccordement d'admission (3), un raccordement d'évacuation (4) et un canal pour milieu (5) reliant le raccordement d'admission (3) au raccordement d'évacuation (4), et avec un élément de soupape (12) déplaçable qui est poussé par un premier élément élastique (27) contre un siège de soupape (19) constitué dans le carter (2) afin de fermer le canal pour milieu (5), et qui est écarté du siège de soupape par un deuxième élément élastique (15) afin d'ouvrir le canal pour milieu (5), dans lequel le premier élément élastique (27) est fabriqué à partir d'un matériau thermiquement activable et présente dans un état désactivé une première force élastique qui est inférieure à celle du deuxième élément élastique (15), et dans un état activé une deuxième force élastique qui est supérieure à celle du deuxième élément élastique (15) de telle sorte que l'élément de soupape (12) est déplacé pour la fermeture du canal pour milieu (5), dans lequel le premier élément élastique (27) est maintenu au moins par segments dans une partie saillante de carter (6) en forme de cylindre creux et dépassant vers l'extérieur du carter (2), et dans lequel le deuxième élément élastique (15) est conçu sous la forme d'un ressort hélicoïdal, repoussé par endroits sur une partie saillante axiale (13) du corps de soupape (12) et maintenu précontraint axialement entre le corps de soupape (12) et le carter (2), **caractérisé en ce que** le ressort hélicoïdal est guidé radialement sur toute sa longueur, par le biais de la partie saillante axiale (13) du corps de soupape (12) et/ou par le biais d'un segment de paroi intérieure (31) du canal pour milieu (5).

2. Dispositif de soupape selon la revendication 1, **caractérisé en ce que** la partie saillante axiale (13) est conçue de longueur telle qu'elle fait saillie, dans l'état désactivé du premier élément élastique (27), dans le canal pour milieu sur une étendue telle qu'elle fait face, par segments, au segment de paroi intérieure (31).

3. Dispositif de soupape selon l'une des revendications précédentes, **caractérisé en ce qu'**une fente radiale restante entre le segment de paroi intérieure (31) et la partie saillante axiale (13) est plus grande qu'un diamètre de fil à ressort du ressort hélicoïdal.

4. Dispositif de soupape selon l'une des revendications précédentes, **caractérisé en ce que** la partie saillante de carter (6) comprend, au niveau de sa face frontale (24) libre opposée au carter, un mandrin thermoconducteur (25), lequel dépasse dans la partie saillante de carter (6) en direction de l'élément de soupape (12) et forme de ce fait une poche de réception annulaire (26) pour un segment longitudinal du premier élément élastique (27) dans la partie saillante de carter (6), dans lequel le mandrin thermoconducteur (25) est conçu sous la forme d'un mandrin creux en forme de gobelet, ouvert sur la face frontale (24) de la partie saillante de carter (6).

5. Dispositif de soupape selon la revendication 4, **caractérisé en ce que** le premier élément élastique (27) est conçu sous la forme d'un ressort hélicoïdal qui est emmanché sur le mandrin thermoconducteur (25) dans la partie saillante de carter (6).

6. Dispositif de soupape selon la revendication 5, **caractérisé en ce que** les ressorts hélicoïdaux sont orientés en alignement axial avec le canal pour milieu (5) et l'élément de soupape (12) est monté coulissant axialement dans le canal pour milieu (5).

7. Dispositif de soupape selon l'une des revendications précédentes, **caractérisé en ce que** le raccordement d'admission (3) et/ou le raccordement d'évacuation (4) débouchent radialement dans le canal pour milieu (5).

8. Dispositif de soupape selon l'une des revendications précédentes, **caractérisé en ce que** l'élément de soupape (12) se situe au moins essentiellement de manière indépendante de sa position de coulissement, au moins par segments, dans la zone du raccordement d'admission (3) dans le canal pour milieu (5).

9. Dispositif de soupape selon l'une des revendications précédentes, **caractérisé en ce que** l'élément de soupape (12) présente une section transversale devenant plus grande en direction du premier élément élastique (27), et **en ce que** le canal pour milieu (5) présente une section transversale devenant plus grande en direction de la partie saillante de carter (6), de sorte que les éléments élastiques (15, 27) et l'élément de soupape (12) peuvent être introduits dans le canal pour milieu (5) par une ouverture de la partie saillante de carter (6).

10. Dispositif de soupape selon l'une des revendications précédentes, **caractérisé en ce qu'**il est prévu une fente de fuite (28) entre l'élément de soupape (12) et la partie saillante de carter (6).

11. Dispositif de soupape selon l'une des revendications précédentes, **caractérisé en ce qu'**au niveau de l'élément de soupape (12) est disposé un élément d'étanchéité (18), en particulier un élément élastomère, en particulier annulaire, de préférence un joint torique, afin de coopérer avec le siège de soupape (19).

12. Dispositif de soupape selon la revendication 11, **caractérisé en ce que** l'élément de soupape (12) comprend, au niveau de son extrémité opposée à l'élément d'étanchéité (18), au moins une partie saillante radiale (21), laquelle est conçue pour coopérer, en tant que butée axiale en direction du siège de soupape (19), avec un palier (29) constitué dans le canal pour milieu (5) de manière axialement espacée du siège de soupape (19).

13. Dispositif de soupape selon la revendication 12, **caractérisé en ce que** l'élément d'étanchéité (18) est disposé au niveau de l'élément de soupape (12) de manière axialement espacée de la partie saillante radiale (21).

14. Dispositif de soupape selon l'une des revendications 12 ou 13, **caractérisé en ce que** le raccordement d'admission (3) débouche dans le canal pour milieu (5) entre le palier (29) et le siège de soupape (19).

15. Dispositif de soupape selon l'une des revendications 12 à 14, **caractérisé en ce que** la partie saillante radiale (21) est conçue pour coopérer, en tant que butée axiale, avec une extrémité frontale de la partie saillante de carter (6).
